# EUROPEAN PATENT APPLICATION

(11) **EP 3 043 433 A1**
(43) Date of publication of application: **13.07.2016**
(21) Application number: 15150514.6
(22) Date of filing: 08.01.2015
(51) Int. Cl.: H02G 5/02

(54) **Bracket-element for connecting a busbar-support-cross-member to frame of a switchgear**

(71) Applicant: ABB S.p.A., 20124 Milano (IT)
(72) Inventor: Valsecchi, Davide, 20831 Seregno (MB) (IT); Frattaruolo, Massimo, 20837 Veduggio con Colzano (MB) (IT); Cagliani, Daniele, 23847 Molteno (LC) (IT)
(74) Representative: De Santis, Giovanni

(57) **Abstract**

A bracket-element suitable for connecting a busbar-support-cross-member (2) to a switchgear-frame (5), comprises:
- a holding-part (7) extending along a first axis (8) and shaped for holding the busbar-support-cross-member (2) along the first axis (8), the holding-part (7) having a resting-wall (9) for receiving and coupling with a longitudinal base-surface (10) of the support-cross-member (2); and
- a connecting-part (11) suitable for coupling with a profile-rod (12) of the switchgear-frame (5).

The connecting-part (11) comprises engaging-means (13) configured for engaging with the profile-rod (12) in a first positioning-configuration (AH) in which the resting-wall (9) is transversely arranged to a longitudinal axis (14) of the profile-rod (12). The engaging-means (13) are furthermore configured for engaging with the profile-rod (12) in further positioning-configurations (OP1; OP2) in which the resting-wall (9) lies on respective planes (P1; P2) which are parallel to the longitudinal axis (14) and placed at different distances from the longitudinal axis (14) respectively.

## Description

The present invention relates to a bracket-element suitable for easily and quickly connecting a busbar-support-cross-member to a frame of a switchgear, in particular within a compartment of a low voltage switchgear. For the purposes of the present application the term switchgear is equivalent to the terms panel or cabinet or switchboard.

In the electrical distribution field, busbar-systems are known which are installed within low voltage switchgears according to different mounting-spatial-configurations. A known type of busbar-systems comprises conducting busbars, made of copper, with a flat shape and a rectangular cross-section, which are fastened through suitable plastics electrically-insulating-blocks to "C"-shaped metal support-cross-members. These support-cross-members can be connected to the profile-rods (i.e. vertical uprights and horizontal crosspieces) of the switchgear-frame by means of several different types of brackets, each type being configured for only a specific mounting-spatial-configuration to be achieved. The brackets comprise a holding-part, having a "C" shaped cross-section and configured for mating and coupling with an end of a support-cross-member, and a connecting-part intended to be fixed to a profile-rod of the switchgear-frame. The connecting-part of each type of bracket is structurally configured differently from the other types of bracket, and is designed for only one specific mounting-spatial-configuration. In other words, the brackets which are used to mount a system-bar in a horizontal configuration are differently shaped compared with the brackets dedicated and used to achieve a vertical installation of the busbar-system.

Furthermore, different types of vertical installations are also possible, i.e. with the vertical busbars more or less internally arranged within the compartment, i.e. at different offset-distances from the lateral sides of the switchgear-frame, that can be correspondingly achieved only by means of different specific types of brackets.

Further different brackets are also appositely designed respectively for a so called "under-roof" installation or a "bottom" installation of the busbars, i.e. arranged horizontally under the roof of the frame or at the bottom of the frame respectively. Evidently, the large number of different types of brackets implies a relevant effort from the point of view of the manufacture, sorting and storage of the stocks of brackets.

Furthermore, some difficulties also arise in connection with the assembly operations of one or more switchgears. When a group or more groups of busbars are to be installed within a switchgear according to one or more desired spatial orientations, a certain number of different corresponding types of brackets is required. This means that the installer-operator must have at his disposal a determined number of brackets of each type required. A precise preventive counting of the bracket-units of each type is therefore necessary, in order to ensure achievement of all the required distinct mounting-spatial-configurations of the busbars. Furthermore, it often occurs that not a single switchgear, but a plurality of switchgears adjacently connected to one other are to be equipped with corresponding busbars, thus making even more difficult the installation procedures.

Alternatively, if a precise preventive counting of the units is not possible for any reasons, for example for an unforeseeability of the mounting-configurations which will be clear and definite only during installation in situ, the operator must be furnished with a superabundant number of brackets of each type.

It would be desirable to overcome all the above mentioned drawbacks, by providing a very versatile bracket-element which in general simplifies assembly-procedures and enables busbars-systems to be quickly and easily mounted within switchgears in any of the mounting-spatial-configurations. This is achieved by a bracket-element as defined in the appended claims and described hereinafter in details. According to the invention, there is provided a bracket-element suitable for connecting a busbar-support-cross-member to a switchgear-frame, the bracket-element comprising:
- a holding-part extending along a first axis and shaped for holding the busbar-support-cross-member along the first axis, the holding-part having a resting-wall for receiving and coupling with a longitudinal base-surface of the support-cross-member; and
- a connecting-part suitable for coupling with a profile-rod of the switchgear-frame.

The connecting-part comprises engaging-means configured for engaging with the profile-rod in a first positioning-configuration in which the resting-wall is transversely arranged to a longitudinal axis of the profile-rod, the engaging-means being furthermore configured for engaging with the profile-rod in further positioning-configurations in which said resting-wall lies on respective planes which are parallel to the longitudinal axis and placed at different distances from the longitudinal axis respectively.

The present disclosure encompasses also an assembly including a plurality of bracket-elements as defined by the annexed claims and disclosed in the following description, and one or more busbar-support-cross-members for installing a busbar-system on a frame of a switchgear.

Furthermore, the present disclosure also encompasses a switchgear including at least one bracket-elements and/or the assembly as defined by the annexed claims and disclosed in the following description. In particular, the switchgear comprises a frame defined by profile-rods which comprise double-stepped surfaces, further comprising one or more busbar-groups which are supported by respective busbar-support cross-members which in turn are connected to said frame through bracket-elements according to the present disclosure.

Characteristics and advantages of the present disclosure will result from the description and from claims.

The present disclosure can be better understood and implemented with reference to the attached drawings that illustrate an embodiments thereof by way of non-limiting example, in which:

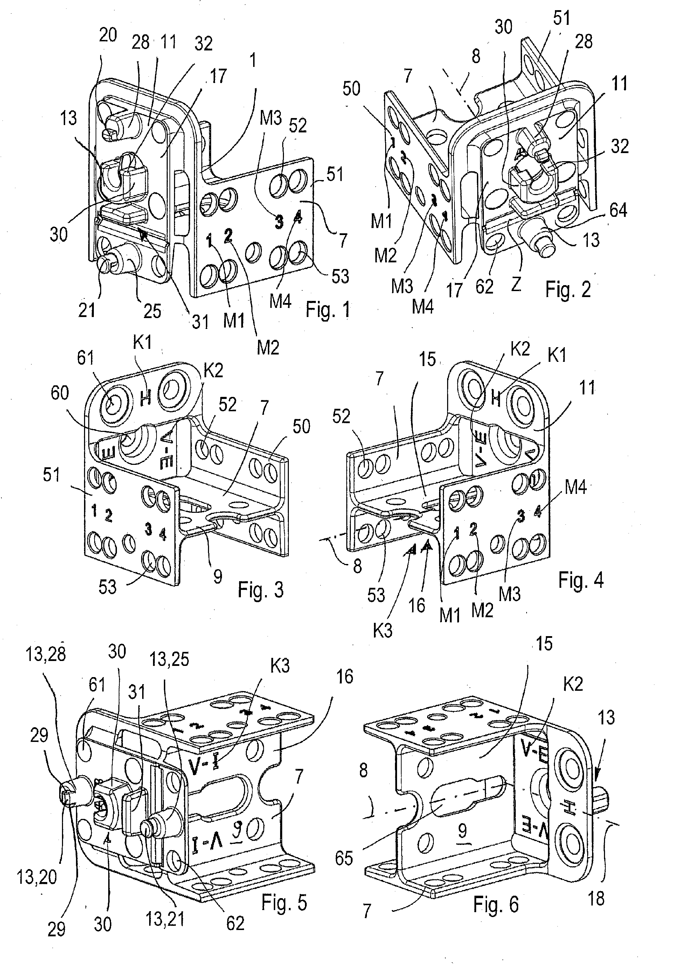

Figures 1 to 12 are different views of a bracket-element according to the disclosure;
Figures 13 and 15 shows, in perspective and side views respectively, a switchgear-frame within which a busbar-system is mounted in a horizontal configuration through brackets-element of the invention;
Figures 14 and 16 show enlarged details of Figures 13 and 15 respectively;
Figure 17 is a perspective view of the switchgear-frame with a busbar-system which is mounted according to a first (more internal) vertical configuration through the brackets-elements of the invention;
Figures 18, 19, 20 are enlarged details of Figures 17;
Figure 21 is a side view of the switchgear-frame in Figure 17;
Figures 22 and 23 show the switchgear with a busbar-system which is mounted according to a second (more external) vertical configuration through the brackets-elements of the invention;
Figures 24 and 25 show, in perspective and side views respectively, a switchgear-frame with a busbar-system in a horizontal mounting configuration and a further busbar-system in a more internal vertical mounting configuration;
Figures 26 and 27 show, in perspective and side views respectively, a horizontal mounting configuration and a more external vertical mounting configuration of busbar-systems;
Figure 28 shows a switchgear with intermediate uprights, comprising a busbar-system arranged in "under-roof" mounting configuration and a further busbar-system arranged in a "bottom" mounting configuration;
Figures 29-30 are fragmentary side and front views of the switchgear-frame in Figure 28;
Figure 31 shows a switchgear-frame with no intermediate uprights, and comprising a busbar-system in a horizontal (under-roof) mounting configuration and a further busbar-system in a vertical mounting configuration.

It should be noted that in the detailed description that follows, in order to clearly and concisely disclose the present invention, the drawings may not necessarily be to scale and certain features of the disclosure may be shown in somewhat schematic form.

With reference to the attached Figures, a bracket-element 1 is described for easily and quickly connecting, in a safe and error-free way, a busbar-support-cross-member 2, supporting a busbar-system 3, to a frame 5 of a switchgear, in particular within a compartment 6 of a low voltage switchgear.

The busbars of each busbar-system 3 are fastened to the busbar-support-cross-member 2 through an insulating-block 70 and are arranged parallel to one another at suitably defined intervals. The bracket-element 1, in particular, enables the connection of a support-cross-member 2 having a "C"-shaped section, to a profile-rod 12 (i.e. a vertical upright or a horizontal crosspiece of the frame 5) which has a two-surface-levels configuration. In other words, reference is made in the following to a profile rod 12 having a double stepped surface, which allow a connection of the bracket-element 1 on different relative positions. More specifically, the profile rod 12 comprises two first surfaces 24, and two second surfaces 27 lying on spaced parallel planes. On each first surface 24 there is obtained a plurality of longitudinally distributed first openings 22, 23, in particular of rectangular and circular shapes respectively. On each second surface 27 there is obtained a plurality of longitudinally distributed second openings 26. A step-surface 33 is transversely arranged between first surface 24 and the adjacent second surface 27.

The bracket element 1 according to the invention, comprises a holding-part 7, extending along a first axis 8. The holding-part 7 is shaped for holding the busbar-support-cross-member 2 along such a first axis 8. The holding-part 7 includes a resting-wall 9 which is intended for receiving and coupling with a longitudinal base-surface 10 of the support-cross-member 2. The holding-part 7 has a "H"-shape, as better described in the following, and comprises, on opposite sides of the resting-wall 9, a first offset-surface 15, and a second offset-surface 16, which are able to mate and couple with the busbar-cross-member 2. On the resting-wall 9 there is obtained a slot-opening 65 for enabling a position-adjustable screw-connection of the busbar-insulating-block 70 to the bracket-element 1.

The bracket element 1 further comprises a connecting-part 11 suitable for coupling with a profile-rod 12 of the switchgear-frame 5. In particular, the holding-part 7 and the connecting-part 11 are integral with one other so as to define a single-piece-block-element 1. The bracket-element 1 can be obtained by metal pressure die casting process. In particular, the bracket-element 1 can be made of a metal alloy comprising a base metal of zinc and alloying elements of aluminium, magnesium, and copper.

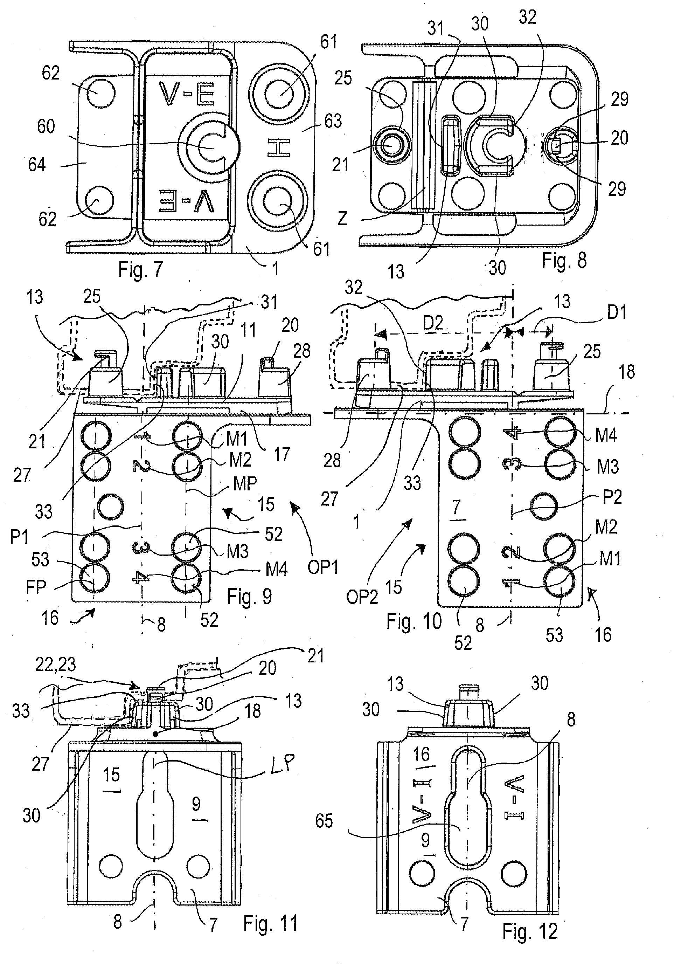

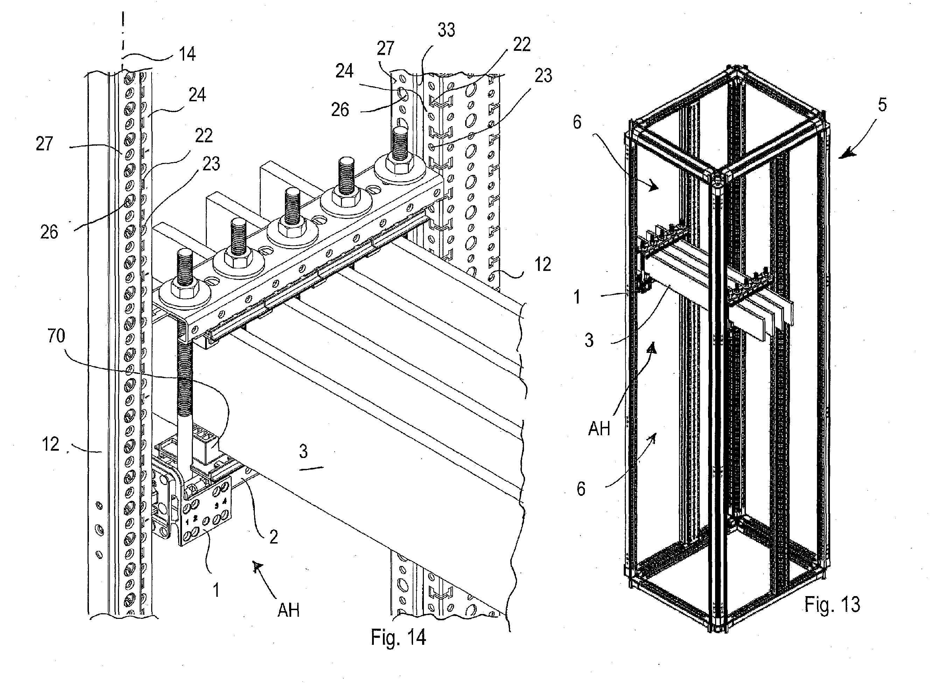

The connecting-part 11 comprises engaging-means 13 configured for engaging with the profile-rod 12 in a first positioning-configuration AH in which the resting-wall 9 is transversely arranged to a longitudinal axis 14 of the profile-rod 12. In other words, the engaging-means 13 enable to connect the bracket-element 1 to a vertical profile-rod 12, with the resting-wall 9 in a horizontal position. In this way, a busbar-system 3 can be installed in a horizontal configuration at any desired zone along such a profile-rod 12 thus achieving a so called "any height" mounting-configuration. Such a configuration is shown in Figures 11, 13, 14, 15, 16.

Analogously, if the bracket-element 1 is mounted to a horizontal profile rod 12 instead of a vertical one, i.e. it is mounted to a top or bottom crosspiece of the frame 5, a vertical arrangement of the busbars 3 can be achieved, at any desired zone within the compartment 6.

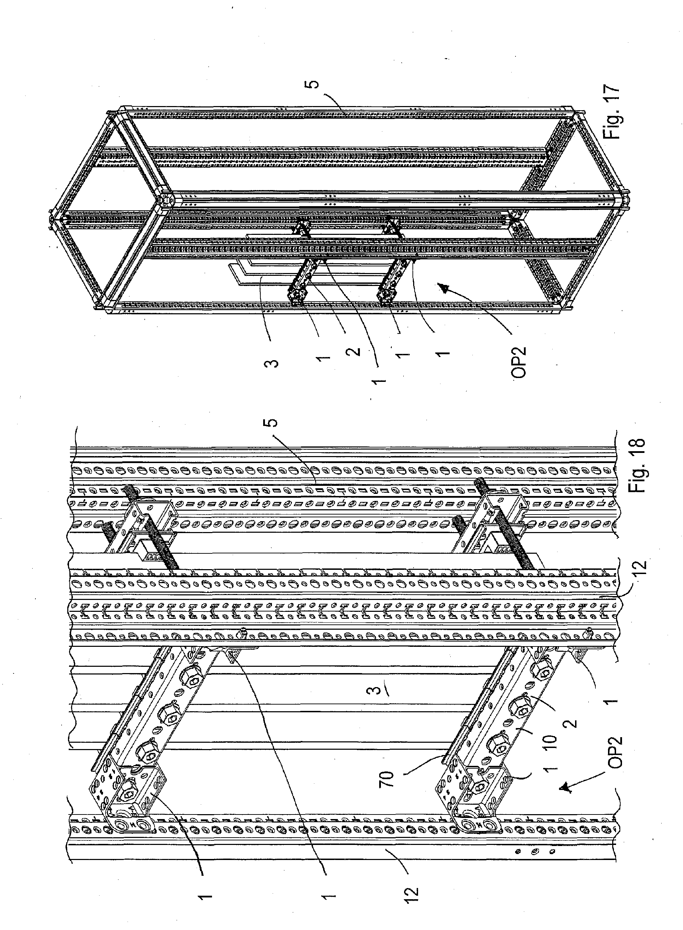

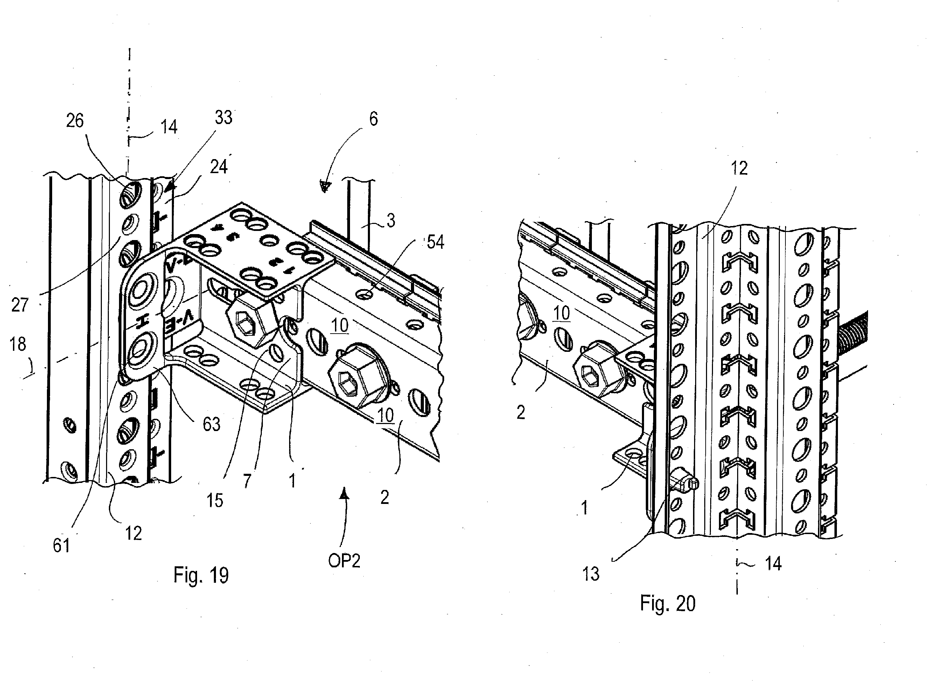

The engaging-means 13 are furthermore configured for engaging with the profile-rod 12 in further positioning-configurations OP1, OP2 in which the resting-wall 9 lies on respective planes P1, P2 which are parallel to said longitudinal axis 14 and placed at different distances from the longitudinal axis 14 respectively, as shown in Figures 9, 10, 17 to 23.

The bracket-element 1 is thus designed for being able to couple with the profile-rod 12 in three different positions, which differ from one other by a different angular orientation of the bracket-element 1 about the first axis 8. More precisely, referring to the connection to a vertical profile-rod 12, the bracket element 1 in the first positioning-configuration AH is arranged with the first offset-surface 15 facing upwards. By rotating the bracket element 1 by +90° or - 90° about the first axis 8, two respective further positioning-configurations are achievable with the offset-surface facing the compartment 6 or facing to the outside of the frame 5 respectively.

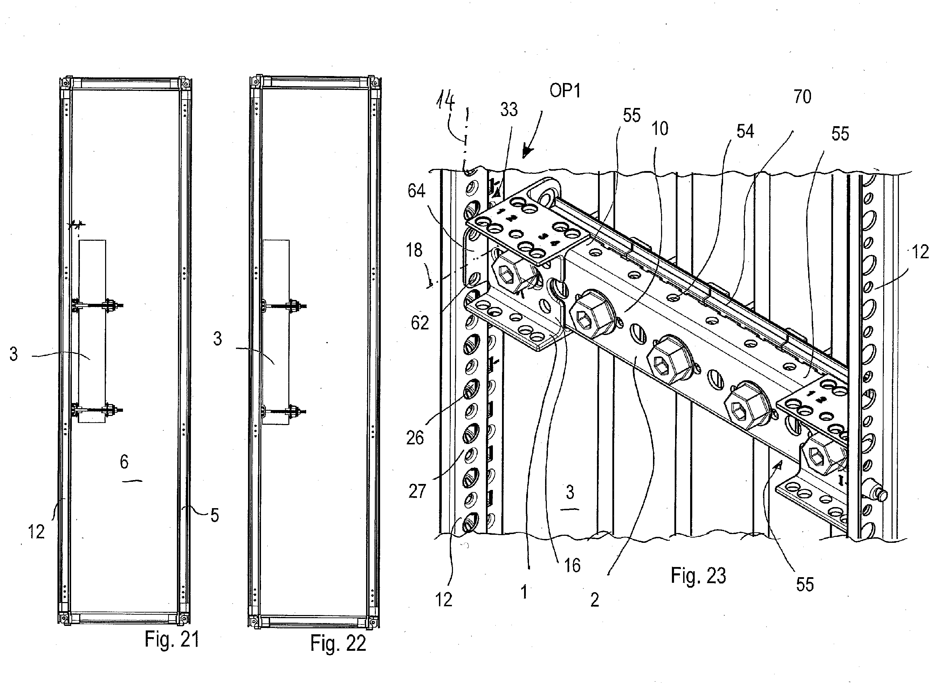

In other words, the engaging-means 13 enable to connect the bracket-element 1 to a vertical profile-rod 12, with the resting-wall 9 in two possible vertical positions with corresponding different distances from a side plane of the switchgear-frame 5. Each of these two vertical positions enables the busbar-cross-member 2 to be mounted at two respective different offset distances from the profile rod 12, thus achieving "more internal" vertical mounting configuration, and a "more external" vertical mounting configuration, which can be chosen in an appropriate way on the basis of the particular space-conditions and/or installation-requirements. The differences of such two different configurations are clearly visible also from a comparison of figures 21 and 22.

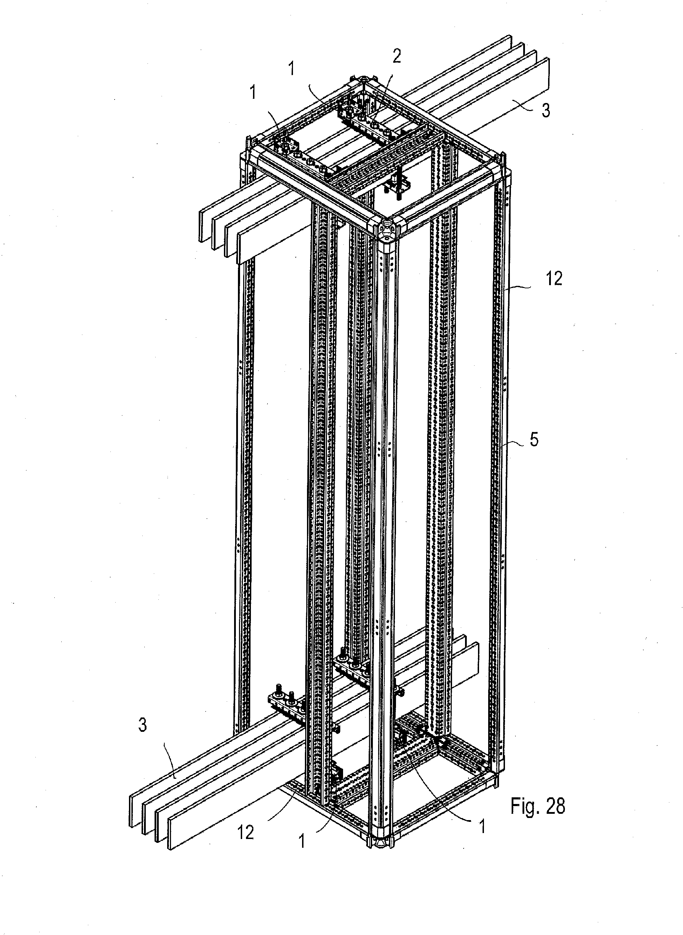

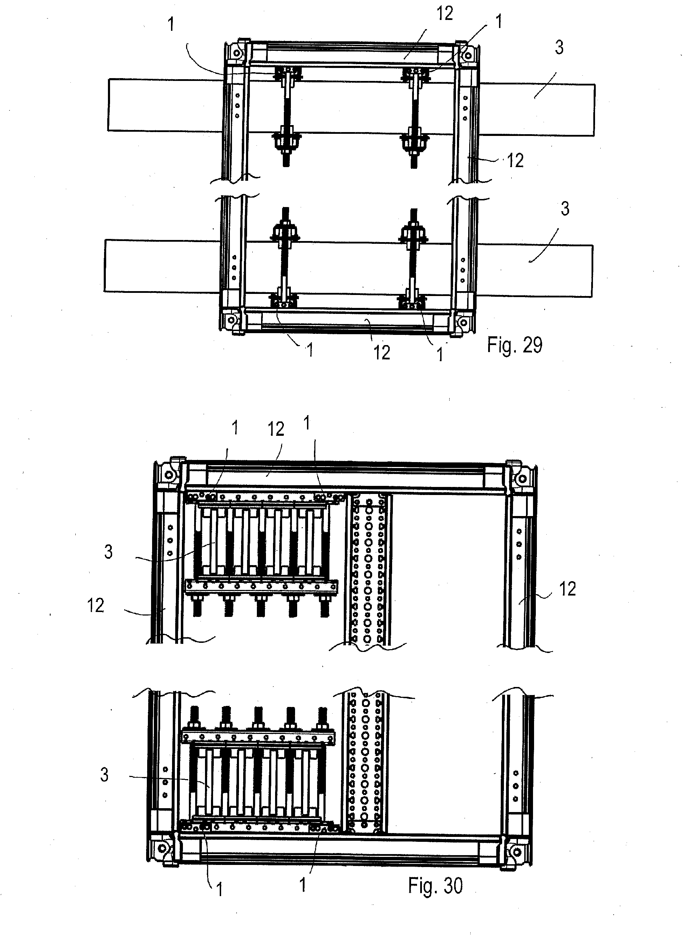

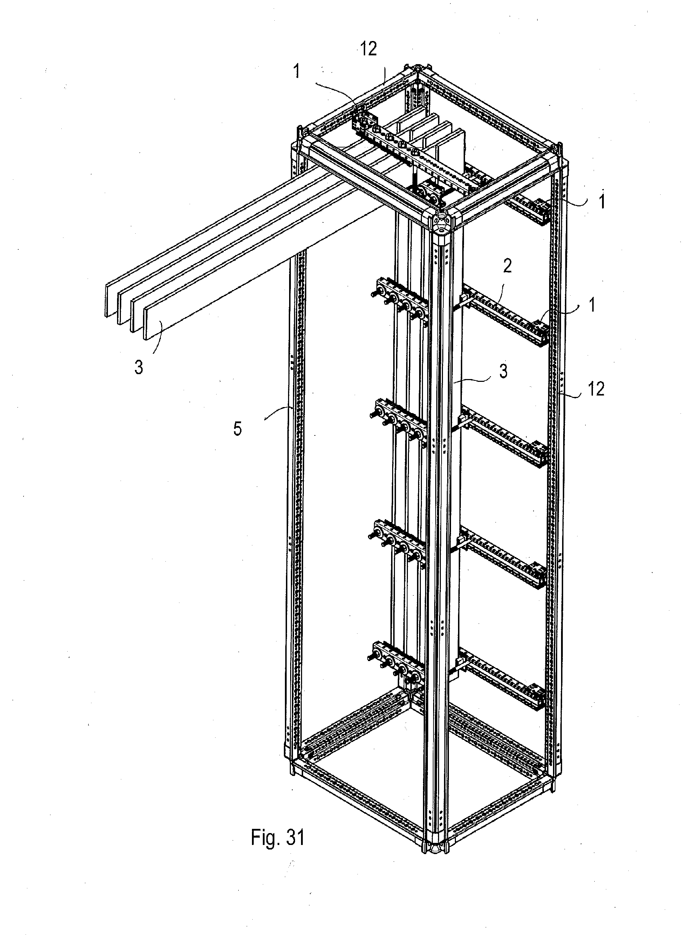

Analogously, if the bracket-element 1 is mounted to a horizontal profile rod 12, i.e. on a top or bottom horizontal crosspiece of the frame 5, two possible horizontal arrangements (with corresponding different quotes) of the busbars 3 can be achieved. Some examples of installations with the bracket-elements 1 connected to the horizontal profile rods (top or bottom) are shown in Figures 28 to 31 in which the "under-roof" mounting configuration and the "bottom" mounting configuration are visible.

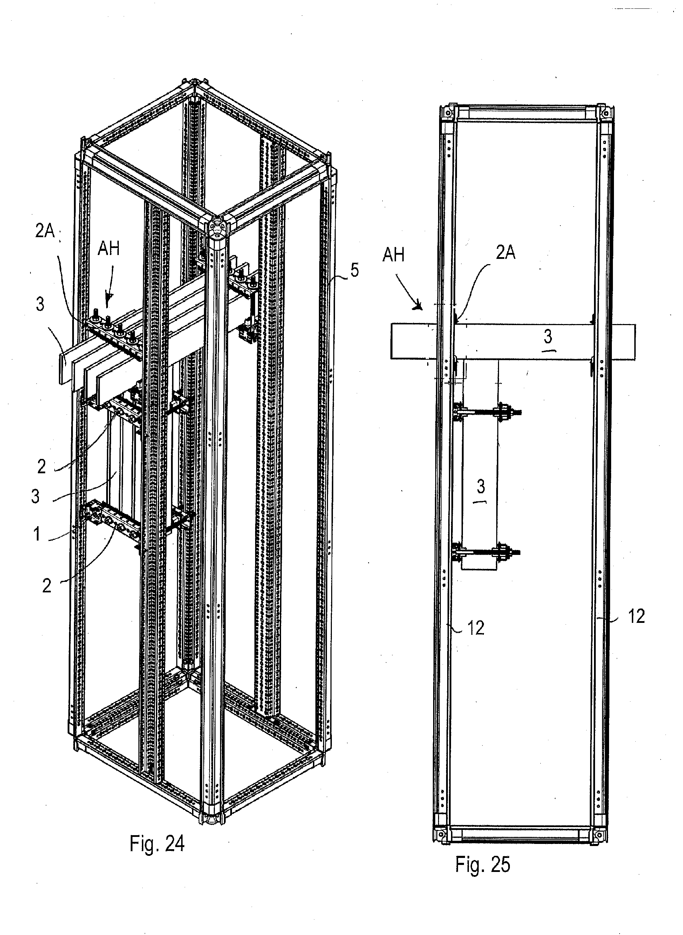

Figures 24 and 25 show an arrangement with busbars 3 in both horizontal and vertical positions. The vertical busbars 3 are mounted according to a "more internal" vertical mounting configuration, because there is a need for an electrical-isolating-distance between the vertical busbars 3 and the support-cross-member 2A which holds the horizontal busbars 3.

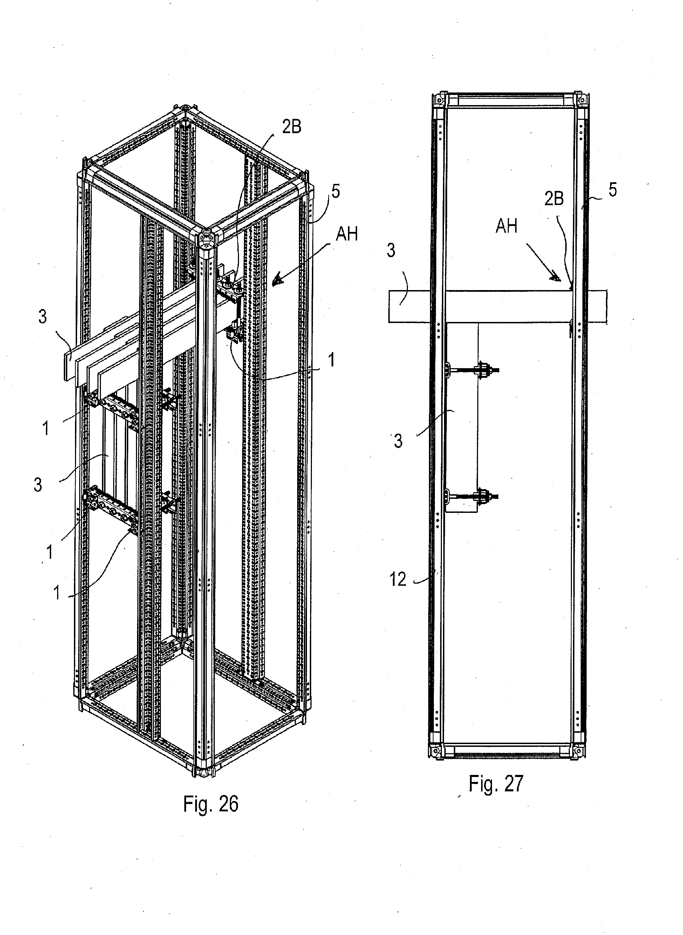

Figures 26 and 27 show another arrangement with busbars 3 in both horizontal and vertical positions. The vertical busbars 3 are mounted according to a "more external" vertical mounting configuration, because there is no need for the above-mentioned electrical-isolating-distance between the vertical busbars 3 and the support-cross-members 2B of the horizontal busbars.

The connecting-part 11 comprises a main-base-wall 17 which is intended to be applied to said profile-rod 12 and from which said engaging means 13 protrude. The main-base-wall 17 extends along a second axis 18 transversely arranged to the above-mentioned first axis 8 and to the resting-wall 9. The engaging means 13 comprise first insertion-means 20, 21 suitable for coupling with any of the first openings 22, 23 longitudinally distributed on the first surface 24 of the profiled-rod 12 so as to achieve the first positioning-configuration AH. The engaging means 13 further comprise second insertion-means 25, 28 suitable for coupling with any of the second openings 26 longitudinally distributed on the second surface 27 of the profiled-rod 12 so as to achieve the further positioning-configurations OP1 or OP2.

The first insertion-means comprise a positioning-tooth-projection 20 adapted for being inserted in a first opening 22 thus acting as a guide for helping to achieve a correct positions. The positioning-tooth-projection 20 prevents, in the first positioning-configuration AH, a rotation of the bracket-element 1 relative to the profiled-rod 12. The first insertion-means comprise a clinging-projection 21 for being inserted in a further first opening 23 and configured for enabling, in cooperation with the positioning-tooth-projection 20, a self-standing-position of the bracket-element 1 on the profiled-rod 12.

In other words, owing to a shape/interference-coupling, the bracket-element 1 is able to keep hooked on the switchgear-frame 5 in the first positioning-configuration AH in a self-standing manner, without the aid of external fastenings. This facilitates the assembly-operations to an installer-operator which can, in a comfortable way, insert a fastening-screw through a passage-opening 60 provided on the main-base-wall 17 for securing the bracket-element 1 to the frame 5.

The positioning-tooth-projection 20 and the clinging-projection 21 are mutually spaced and are arranged along a same lying-plane LP - containing the first axis 8 and the second axis 18 - for engaging with two respective spaced apart first openings 22, 23, in particular a rectangular opening 22 and a circular opening 23. In particular, the positioning-tooth-projection 20 has a substantially square-shape cross-section, with a pair of oppositely arranged, and mutually parallel side-sliding-surfaces 29. The side-sliding-surfaces 29 are arranged parallel to the lying-plane LP and adapted for going into contact with, and for sliding relative to, straight-edges of the respective rectangular first opening 22 thus enabling mounting of the bracket element 1 on the profile-rod 12 with no relative rotation in the first positioning-configuration AH.

The second insertion-means of the bracket-element 1 comprise a positioning-pin-projection 25 and a further positioning-pin-projection 28 which are spaced apart from one other and arranged along a same plane. In particular, the positioning-pin-projection 25 and the further positioning-pin-projection 28 and arranged along the above-mentioned lying-plane LP. The positioning-pin-projection 25 and the further positioning-pin-projection 28 are adapted for being selectively (i.e. either of them at a time) inserted in any desired second openings 26 in order to correspondingly achieve, for the bracket-element 1, the further positioning-configuration OP1 or the further positioning-configuration OP2 in which positions the second axis 18 results orthogonally arranged to the longitudinal axis 14.

The positioning-pin-projection 25 and the further positioning-pin-projection 28 protrude parallel to the first axis 8 from a side of the main-base-wall 17 opposite with respect to the holding-part 7. More specifically, the clinging-projection 21 is obtained on the positioning-pin-projection 25 and the positioning-tooth-projection 20 is obtained on the further positioning-pin-projection 28.

The positioning-pin-projection 25 and the further positioning-pin-projection 28 are arranged at opposite zones with respect to, and at different distances from, the resting-wall 9. Owing to this configuration two different offset-mounting-configurations are possible for the busbar-support-cross-member 2: a first offset-mounting-configuration in which the positioning-pin-projection 25 is engaged in a respective second opening 26 whereas the further positioning-pin-projection 28 is positioned more internally within the compartment 6, or a second offset-mounting-configuration in which the further positioning-pin-projection 28 is engaged in a respective second opening 26 whereas the positioning-pin-projection 25 is positioned more internally within said compartment 6.

With reference to Figures 9, 10, 19 and 23, the positioning-pin-projection 25 is spaced apart from the resting-wall 9 by a first offset-distance D1 and the further positioning-pin-projection 28 is spaced apart from the resting-wall 9 by a second offset-distance D2 which is greater than the above-mentioned first offset-distance D1. The first offset distance D1 is set so that, when said positioning-pin-projection 25 is engaged in the respective second opening 26, the first offset-resting-surface 15 faces said compartment 6 and is arranged at a first offset-position, i.e. a minor offset-position relative to the profile-rod 12. Conversely, the second offset distance D2 is defined so that, when the further positioning-pin-projection 28 engages with a the respective second opening 26, the second offset-resting-surface 16 faces the compartment 6 and is spaced at a second offset-position, i.e. a major offset-position from the profile-rod 12 so as to result more internally located within said compartment 6 than the above described first offset-position.

The engaging-means 13 include abutment-jut-means 30, 31, 32 configured for abutting on the step-surface 33 of the profiled-rod 12 so as to prevent a rotation and clearance of the bracket-element 1 relative to the profiled-rod 12.

The abutment-jut-means comprise a pair of first abutment surfaces 30 which are mutually parallel and lie on respective planes which are parallel to the abode-described first axis 8 and orthogonal to the resting-wall 9. Each abutment surface 30 is shaped for abutting on a respective step-surface 33 in correspondence of the first-positioning-configuration which is show in Figures 11, 13, 14, 15, 16. Therefore, one or the other of the abutment surfaces 30 (depending on the right or left positioning of the bracket-element 1 relative to the frame 5) cooperates in connection with the first-insertion means 20, 21 when the first positioning-configuration AH is achieved.

The distance between each first abutment-surface and the plane defined by the first insertion means 20 and 21, can be suitably chosen in order to achieve a slight mechanical interference of the bracket-element 1 when it is coupled to the profile rod 12 thus cooperating to ensure the above-mentioned self-standing position for the bracket-element 1. The abutment-jut-means further comprise a second abutment surface 31 and a third abutment-surface 32, arranged according to respective planes parallel to the resting wall 9. The second abutment surface 31 and the third abutment-surface 32 are adapted for abutting on the step-surface 33 of the profile-rod 12 each in one of the afore mentioned further-positioning-configurations OP1, OP2 respectively.

The second abutment surface 31 and the third abutment surface 32 are interposed between the positioning-pin-projection 25 and the further positioning-pin-projection 28. The second abutment surface 31 faces the positioning-pin-projection 25 whereas the third abutment surface 32 faces the further positioning-pin-projection 28. The second abutment surface 31 and the third abutment surface 32 are spaced apart from the positioning-pin-projection 25 and from the further positioning-pin-projection 28 respectively by a same distance. Such a distance is properly chosen so as to adapt the bracket-element 1 to the geometrical shape of the stepped surface of the profile rod 12. Such a distance is properly chosen so that when either the positioning-pin-projection 25 or the further positioning-pin-projection 28 is received in a second opening 26, correspondingly the second abutment-surface 31 or the third abutment-surface 32 abuts against the step-surface 33, as respectively shown in Figures 9 and 10. The distance between the positioning-pin-projection 25 and the second abutment-surface 31 can be suitably chosen in order to achieve a slight mechanical interference of the bracket-element 1 when it is coupled to the profile rod 12 thus ensuring a self-standing position for the bracket-element 1, as shown in Figures 9 and 23. In other words, owing to a shape/interference-coupling the bracket-element 1 is able to keep hooked on the switchgear-frame 5 in the further-positioning-configuration OP1 in a self-standing manner, without the aid of external fastenings. This facilitates the assembly-operations to an installer-operator which can, in a comfortable way, insert a fastening-screws in apposite passage-openings 62 of the connecting-part 11 for securing the bracket-element 1 to the frame 5.

Analogously, the same applies to the further positioning-pin-projection 28 and the third abutment-surface 32, whose relative distance is such as to cause a slight mechanical interference of the bracket-element 1 with the profile rod 12 in the further positioning-configuration OP2 (shown in Figures 10, 18, 19), thus allowing a self-standing position for the bracket-element 1. The installer-operator can easily insert fastening-screw-elements through passage-openings 61 while the bracket-element 1 is autonomously anchored to the profile-rod 12.

A more detailed description of the holding-part 7 follows. The holding-part 7 has a "H"-shape. In particular, the holding-part 7 comprises a first side-wall 50 and a second side-wall 51 mutually parallel which extend parallel to the first axis 8 alongside the resting-wall 9. Each of the first 50 and second 51 side-walls protrudes orthogonally from the resting-wall 9 by equal amounts in opposite directions so as to delimit at both sides of the resting-wall 9 respective "C" shaped housing-seats for the "C"-busbar-support-cross-member 2. The first 50 and second 51 side-walls are adapted to mate with respective parallel side-zones 55 of the busbar-support-cross-member 2. On each of the first 50 and second 51 side-walls there are obtained a series of median coupling-openings 52, arranged according to a median-plane MP orthogonal to the connecting-part 11, and a series of out-of-axis coupling-openings 53, arranged according to a further plane FP parallel to and spaced apart from such a median-plane MP. The coupling openings 52, 53 of each of the above-mentioned series are longitudinally distributed parallel to the first axis 8 in a mutual spaced position which is defined in function of coupling-holes 54 provided on the busbar-support-cross-member 2. By suitable mating any of the coupling openings 52, 53 with one of the coupling-holes 54, different desired coupling-positions (along the first axis 8) of the cross-member 2 with bracket-element 1 are achievable. The choice of the suitable relative matching of a coupling opening 52, 53 with one of the coupling-holes 54 position for example depends on the relative position of a horizontal busbar-system with a vertical busbar-system, which are staggered along a depth direction in the compartment 6 by a distance which is equal to the thickness of each busbar.

The bracket-element 1 includes assembly-indicating-means M1, M2, M3, M4, K1, K2, K3, which provide helpful information for ensuring an error-free coupling of the busbar-support-cross-member 2 with the holding-part 7 of the bracket-element 1 and for ensuring an error-free mounting of the bracket-element 1 on the switchgear-frame 5 according to the desired configuration, among the first positioning-configuration AH and further positioning-configurations OP1, OP2.

The assembly-indicating-means comprise visual reference-marks M1, M2, M3, M4 which are printed or moulded or carved on the holding-part 7 for helping to achieve a correct position of the busbar-support-cross-member 2 relative to the bracket-element 1. A specific visual-reference-mark M1, M2, M3, M4 is placed near each of the coupling-opening 52, 53. The visual-reference-marks M1, M2, M3, M4 associated to the coupling-openings 52, 53 of each series of the first side-wall 50 are sequentially distributed according to a first spatial-order with respect to, or starting from, the connecting-part 11. Conversely, the visual-reference-marks M1, M2, M3, M4 associated to the coupling-openings 52, 53 of the second side-wall 51 are spatially sequentially distributed with a second spatial-order which is reverse to the first spatial-sequence associated to the first side-wall 50.

The visual-reference-marks M1, M2, M3, M4 can be numbers, letters, or any other desired reference marks.

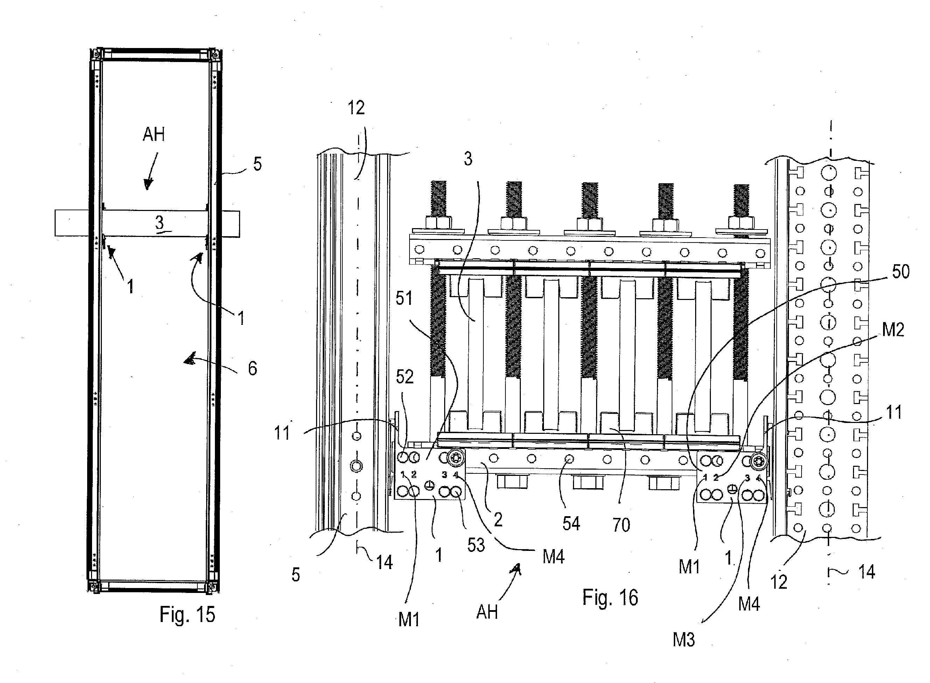

With reference to Figure 16, for example, if the support-cross-member 2 is connected to the bracket-element 1 on the left by mating the "M4" median-coupling 52 with a respective coupling-hole 54 of the cross-member 2, the installer-operator will easily and correctly connect the cross-member 2 to the bracket-element 1 on the right by simply mating the "M4" median-coupling 52 of the latter with the proper coupling-hole 54 of the cross-member 2. As evident from Figure 16, the "M4" median-coupling 52 which is on the first side wall 50 of the bracket-element 1 on the right is closer to the connecting part 11. On the contrary, the "M4" median-coupling 52 which is on the second side wall 51 of the bracket-element 1 on the left is farther from the respective connecting part 11.

The assembly-indicating-means comprise orientation-reference-marks K1, K2, K3 which are printed or moulded or carved on the main-base-wall 17 and on the resting-wall 9 for indicating a correct orientation and position of the bracket-element 1 relative to the switchgear-frame 5 in order to correctly achieve the first-positioning-configuration AH or one of the further-positioning-configurations OP1, OP2.

Each of the visual orientation-marks K1, K2, K3 are located on the holding part 7 or on the connecting part 11 so as to result visible/readable from a view-direction, relatively to the compartment 6, only in correspondence of a right orientation and position of the bracket-element 1 with respect to the switchgear-frame 5. In this way it is ensured a correct achievement of the desired configuration, i.e. the first positioning-configuration AH or one of the further positioning-configurations OP1, OP2.

In a exemplificative non limitative version, as shown in the Figures, the visual orientation-marks K1, K2, K3 comprises letters indicative of a specific position/orientation configuration. For example, the visual orientation mark K1 may comprise the letter "H" for indicating a "horizontal" arrangement of the busbars 3. When the letter "H" is in the correct position to be readable, it means that the bracket-element 1 is correctly oriented for achieving the "horizontal" mounting-configuration for the busbars 3.

The visual orientation mark K2 may comprise the letters "V-E" for indicating a "Vertical External" arrangement of the busbars 3. When the letters "V-E" can be read form the inside of the compartment 6 and are correctly oriented, it means that the "vertical external" mounting configuration (i.e. the positioning-configuration OP1) is correctly achieved. The same applies for the visual orientation mark K3 which may comprise the letters "V-I" for indicating a "Vertical Internal" arrangement of the busbars 3. Other type of marks can be adopted.

The bracket-element has a thickness-reduction-zone Z which is obtained on the connecting-part 11. Such a thickness-reduction-zone Z acts as a breakable-weakened line for removing a portion 64 of the connecting-part 11. A possible removal of the portion 64 is useful for adapting the bracket-element 1 to a further mounting configuration in which a mechanical interference condition exists which is caused by a protruding part of the switchgear-frame 5, for example by an additional door-frame which is fastened to the front side of the switchgear-frame 5.

It is evident from the above-description and figures that the bracket-element 1 according to the invention fully achieves the intended aims of providing a technical solution for the quick, easy, cheap and versatile connection of busbars in a switchgear. The bracket element 1 replaces all the different types of prior-art brackets. A single type of component, i.e. the bracket element 1, enables to achieve all the possible mounting-spatial-configurations, differently from the known solutions which impose several different types of brackets, each type being configured for only a specific mounting-spatial-configuration to be achieved. Evidently, the bracket-element 1 in general simplifies the assembly procedures which are simplified and accelerated with respect to the more time-consuming prior-art solutions.

Also advantageous effects are implied from the point of view of the manufacture, sorting and storage-procedures, owing to the single multi-functional bracket-element 1 to be handled.

The bracket element 1 is susceptible of modifications or variations all within the scope of the inventive concept, and any details may be replaced with technically equivalent elements.

In particular, the shape, position and dimensions of the holding-part 7 or of the connecting part 11 can be configured differently from what above described, according to specific needs or particular geometrical configurations of the profile rods 12 and /or of the busbar-support-cross-member 2.

## Claims

1. Bracket-element suitable for connecting a busbar-support-cross-member (2) to a switchgear-frame (5), said bracket-element (1) comprising:
- a holding-part (7) extending along a first axis (8) and shaped for holding said busbar-support-cross-member (2) along said first axis (8), said holding-part (7) having a resting-wall (9) for receiving and coupling with a longitudinal base-surface (10) of said support-cross-member (2);
- a connecting-part (11) suitable for coupling with a profile-rod (12) of said of switchgear-frame (5);
**characterised in that** said connecting-part (11) comprises engaging-means (13) configured for engaging with said profile-rod (12) in a first positioning-configuration (AH) in which said resting-wall (9) is transversely arranged to a longitudinal axis (14) of said profile-rod (12), said engaging-means (13) being furthermore configured for engaging with said profile-rod (12) in further positioning-configurations (OP1; OP2) in which said resting-wall (9) lies on respective planes (P1; P2) which are parallel to said longitudinal axis (14) and placed at different distances from said longitudinal axis (14) respectively.

2. Bracket-element according to claim 1, wherein said holding-part (7) has, at opposite sides, a first offset-resting-surface (15) and a second offset-resting-surface (16) which are able to mate and couple with said busbar-cross-member (2), and wherein said connecting-part (11) comprises a main-base-wall (17) which is intended to be applied to said profile-rod (12) and from which said engaging means (13) protrude, said main-base-wall (17) extending along a second axis (18) transversely arranged to said first axis (8) and to said resting-wall (9), wherein said engaging means (13) comprise first insertion-means (20, 21) suitable for coupling with first openings (22, 23) longitudinally distributed on a first surface (24) of said profiled-rod (12) so as to achieve said first positioning-configuration (AH), said engaging means further comprising second insertion-means (25, 28) suitable for coupling with second openings (26) longitudinally distributed on a second surface (27) of said profiled-rod (12) so as to achieve said further positioning-configurations (OP1; OP2).

3. Bracket-element according to claim 2, wherein said first insertion-means comprise a positioning-tooth-projection (20) adapted for being inserted in a first opening (22) for preventing, in said first positioning-configuration (AH), a rotation of said bracket-element (1) relative to said profiled-rod (12), and a clinging-projection (21) suitable for being inserted in a further first opening (23) and configured for enabling a self-standing-position of said bracket-element (1) on said profiled-rod (12).

4. Bracket-element according to claim 3, wherein said positioning-tooth-projection (20) and said clinging-projection (21) are mutually spaced and are arranged along a same lying-plane (LP) containing said first axis (8) and said second axis (18) for engaging with two respective spaced apart first openings (22, 23), and wherein said positioning-tooth-projection (20) comprises side-sliding-surfaces (29) arranged parallel to said lying-plane (LP) and adapted for going into contact with, and for sliding relative to, straight-edges of the respective first opening (22) thus enabling mounting of said bracket element (1) on said profile-rod (12) with no relative rotation in said first positioning-configuration (AH).

5. Bracket-element according to any one of claims 2 to 4, wherein said second insertion-means comprise a positioning-pin-projection (25) and a further positioning-pin-projection (28) which are spaced apart from one other and arranged along a same plane containing said first axis (8) and said second axis (18), wherein said positioning-pin-projection (25) and said further positioning-pin-projection (28) are adapted for being selectively inserted in one of said second openings (26) so as to correspondingly achieve, for said bracket-element (1), one of said further positioning-configurations (OP1, OP2) in which said second axis (18) is orthogonally arranged to said longitudinal axis (14).

6. Bracket element according to claim 5 as depending to claim 4, wherein said positioning-pin-projection (25) and said further positioning-pin-projection (28) protrude parallel to said first axis (8) from a side of said main-base-wall (17) opposite with respect to said holding-part (7), said clinging-projection (21) being obtained on said positioning-pin-projection (25) and said positioning-tooth-projection (20) being obtained on said further positioning-pin-projection (28).

7. Bracket-element according to claim 5 or 6, wherein said positioning-pin-projection (25) and said further positioning-pin-projection (28) are arranged at opposite zones with respect to, and at different distances from, said resting-wall (9), so as to provide two possible different offset-mounting-configurations for said busbar-support-cross-member (2), said two possible different offset-mounting-configurations comprising a first offset-mounting-configuration in which said positioning-pin-projection (25) is engaged in a respective second opening (26) and said further positioning-pin-projection (28) is positioned more internally in a compartment (6) delimited by said switchgear-frame (5), and a second offset-mounting-configuration in which said further positioning-pin-projection (28) is engaged in a respective second opening (26) and said positioning-pin-projection (25) is positioned more internally within said compartment (6).

8. Bracket-element according to claim 7, wherein said positioning-pin-projection (25) is spaced apart from said resting-wall (9) by a first offset-distance (D1) and said further positioning-pin-projection (28) is spaced apart from said resting-wall (9) by a second offset-distance (D2) which is greater than said first offset-distance (D1), said first offset distance (D1) being defined so that, when said positioning-pin-projection (25) is engaged in the respective second opening (26), said first offset-resting-surface (15) faces said compartment (6) and is arranged at a first offset-position relative to said profile-rod (12), said second offset distance (D2) being defined so that, when said further positioning-pin-projection (28) is engaged in the respective second opening (26), said second offset-resting-surface (16) faces said compartment (6) and is at a second offset-position from said profile-rod (12) more internally located within said compartment (6) than said first offset-position.

9. Bracket-element according to any one of preceding claims, wherein said engaging-means (13) include abutment-jut-means (30, 31, 32) for abutting on a step-surface (33) of said profiled-rod (12) so as to prevent a rotation and clearance of said bracket-element (1) relative to said profiled-rod (12).

10. Bracket-element according to claim 9, wherein said abutment-jut-means comprises a pair of first abutment surfaces (30) lying according to respective planes which are parallel to said first axis (8) and orthogonal to said resting-wall (9), each of said first abutment surfaces (30) being shaped for abutting on a respective step-surface (33) in said first-positioning-configuration.

11. Bracket-element according to claim 9 or 10, wherein said abutment-jut-means comprises a second abutment surface (31) and a third abutment-surface (32), arranged according to respective planes parallel to said resting wall (9), said second abutment surface (31) and third abutment-surface (32) being shaped for abutting on said step-surface (33) each in one of said further-positioning-configurations (OP1, OP2) respectively.

12. Bracket-element according to any one of claims 9 to 11, as depending to any of claims 5 to 8, wherein said second abutment surface (31) and third abutment surface (32) are interposed between said positioning-pin-projection (25) and said further positioning-pin-projection (28), said second abutment surface (31) facing said positioning-pin-projection (25) and said third abutment surface (32) facing said further positioning-pin-projection (28), said second abutment surface (31) and said third abutment surface (32) being spaced apart from said positioning-pin-projection (25) and from said further positioning-pin-projection (28) respectively by a same distance.

13. Bracket-element according to claim 12, wherein said positioning-pin-projection (25) with said second abutment surface (31), and said further positioning-pin-projection (28) with said third abutment surface (32) are so configured as to enable said bracket-element(1) to keep hooked on said switchgear-frame (5) through shape/interference-coupling in any of said further-positioning-configurations (OP1, OP2) in a self-standing manner.

14. Bracket-element according to any one of the preceding claims, and carrying assembly-indicating-means (M1, M2, M3, M4, K1, K2, K3) providing informations for ensuring an error-free coupling of said busbar-support-cross-member (2) with said holding-part (7) and for ensuring an error-free mounting of said bracket-element (1) on said switchgear-frame (5) according to said first positioning-configuration (AH) or according to said further positioning-configurations (OP1, OP2).

15. Bracket-element according to claim 14, wherein said assembly-indicating-means comprise visual reference-marks (M1, M2, M3, M4) which are printed or moulded or carved on said holding-part (7) for helping to achieve a correct position of said busbar-support-cross-member (2) relative to said bracket-element (1) and visual orientation-marks (K1, K2, K3) which are printed or moulded or carved on said connecting part (11) and holding-part (7) for helping to achieve a correct orientation and position of said bracket-element (1) relative to said switchgear-frame (5), each of said visual orientation-marks (K1, K2, K3) being so located as to result visible/readable from a relative view-direction only in correspondence of a right orientation and position of said bracket-element (1) relative to said switchgear-frame (5) in order to correctly achieve the desired configuration among said first (AH) and further (OP1,OP2) positioning-configurations.

16. Bracket-element according to any one of the preceding claims, wherein said holding-part (7) has a "H"-shape and comprises a first side-wall (50) and a second side-wall (51) mutually parallel which extend parallel to said first axis (8) alongside said resting-wall (9), each of said first (50) and second (51) side-walls protruding orthogonally from said resting-wall (9) by equal amounts in opposite directions so as to delimit at both sides of said resting-wall (9) respective "C" shaped housing-seats for said "C"-busbar-support-cross-member (2), said first (50) and second (51) side-walls being adapted to mate with respective parallel side-zones (55) of said busbar-support-cross-member (2), wherein on each of said first (50) and second (51) side-walls there are obtained a series of median coupling-openings (52), arranged according to a median-plane (MP) orthogonal to said connecting-part (11) and a series of out-of-axis coupling-openings (53), arranged according to a further plane (FP) parallel to and spaced apart from said median-plane (MP), the coupling openings (52, 53) of each of said series being longitudinally distributed parallel to said first axis (8) according to so a mutual spaced position which is defined in function of coupling-holes (54) provided on said busbar-support-cross-member (2) as to provide to the latter different possible coupling-positions, along said first axis (8), relative to said bracket-element (1).

17. Bracket-element according to claim 16 as appended to claim 14 or 15, wherein a specific visual-reference-mark (M1, M2, M3, M4) of said assembly-indicating-means is dedicated to, and placed near each of said coupling-opening (52, 53), wherein the visual-reference-marks (M1, M2, M3, M4) associated to the coupling-openings (52, 53) of each series of said first side-wall (50) are sequentially distributed according to a first spatial-order with respect to said connecting-part (11), whereas the visual-reference-marks (M1, M2, M3, M4) associated to the coupling-openings (52, 53) of each series of said second side-wall (51) are spatially sequentially distributed, with respect to said connecting-part (11), with a second spatial-order which is reverse to said first spatial-sequence, and wherein said orientation-reference-marks (K1, K2, K3) are provided on said main-base-wall (17) and on said resting-wall (9) for indicating a correct orientation and position of said bracket-element (1) relative to said switchgear-frame (5) in order to achieve said first-positioning-configuration (AH) or one of said further-positioning-configurations (OP1, OP2).

18. Bracket-element according to any one of the preceding claims, wherein on said connecting-part (11) there is obtained a passage-opening (60) suitable for housing a screw-element in order to fasten said bracket-element (1) to said profile-rod (12) in said first positioning-configuration (AH), further passage-openings (61, 62) being obtained on opposite end-zones (63, 64) of said connecting-part (11) for housing further screw-elements in order to fasten said bracket-element (1) in either of said further positioning-configurations (OP1, OP2), on said resting-wall (9) there being also obtained a slot-opening (65) for enabling a position-adjustable screw-connection of a busbar-insulating-block (70) to said bracket-element (1).

19. Bracket-element according to any one of the preceding claims, wherein a thickness-reduction-zone (Z) is obtained on said connecting-part (11), said thickness-reduction-zone (Z) acting as a breakable-weakened line for removing a portion of said connecting-part (11) in order to adapt said bracket-element (1) to a further mounting configuration in which a mechanical interference condition exists which is caused by a protruding part of said switchgear-frame (5).

20. Bracket-element according to any one of the preceding claims, wherein said holding-part (7) and said connecting-part (11) are integral with one other so as to define a single-piece-block-element which is obtained by metal pressure die casting process.

21. An assembly including a plurality of bracket-elements according to one or more of the preceding claims 1-20, and one or more busbar-support-cross-members for installing a busbar-system on a frame of a switchgear.

22. A switchgear comprising a bracket-element according to one or more of the preceding claims 1-20 and/or the assembly according to claim 21.
